# EUROPEAN PATENT APPLICATION

(11) **EP 0 936 419 A2**
(43) Date of publication of application: **18.08.1999**
(21) Application number: 98119659.5
(22) Date of filing: 17.10.1998
(51) Int. Cl.: F24H 3/04

(54) **Direct-fired gas circulating heating system**

(30) Priority: 17.02.1998 IT MI980095 U
(71) Applicant: TECNOCLIMA S.p.A., 38057 Pergine Valsugana (Trento) (IT)
(72) Inventor: Vescovi, Alfonso, 38068 Rovereto (Trento) (IT)
(74) Representative: Carloni, Franco

(57) **Abstract**

A direct-fired gas circulating heating system of the type having a panelled housing (11) provided with at least a fresh air intake opening (17) and a hot air delivery opening (18) and enclosing a burner (20) and a fan assembly (30) is characterized in that the fan assembly (30) is comprised of only one fan (30) and this fan (30) is positioned downstream the burner (20) so as to cause an air flow rate higher than that necessary for supplying the burner (20) so that the exceeding air will dilute the flue gases generated by the combustion in the burner (20).

## Description

The present invention generally relates to direct-fired gas circulating heating systems and, more in particular, an improved heating system of this type.

The term "direct-fired gas circulating heating system" used in the present invention is intended to designate a heating system which delivers hot air in admixture with the combustion products. These heating systems are generally used for heating non human living quarters where the air mixed with the combustion products is generally tolerated, permitted and required.

The heating system of the invention is intended for fixed or canalized installations, but it can be equipped with wheels in order to be movable. It also can be used outdoors and the materials used are chosen for such requirements.

The above mentioned heating system meets efficiently almost all the heating requirements and it is adapted for some specific uses, e.g. for heating greenhouse, livestock and other non human living quarters, where mixing the products of combustion with air is permitted.

Systems of this type are already known and generally comprise a lower combustion chamber communicating with an upper fan assembly which mixes combustion products with ambient air and discharges this mixture laterally from the unit. The fan assembly has two cylindrical fans each with different critical speeds, one of which operates at lower speed for pulling in room air and discharging it in order to destratify the room air whereas the other fan operates at higher speed only during the operation of the burner.

This heating system has the disadvantage of having a complex structure and of requiring a pair of centrifugal fans for its operation.

An objective of this invention is to provide a direct-fired gas circulating heating system which can be operated with different kinds of gaseous fuels.

Another objective of this invention is to provide a direct-fired gas circulating heating system which is particularly simple and compact in its configuration and adapted to be used for heating installations which are exposed to wheather severities.

Still another objective of the present invention is to provide a direct-fired gas circulating heating system featuring a good performance in terms of thermic efficiency and economical operation as well as having a simple design.

More particularly, the above mentioned objectives are reached by a direct-fired gas circulating heating system of the type having a panel led housing provided with at least a fresh air intake opening and a hot air delivery opening and enclosing a burner and a fan assembly, characterized in that the fan assembly is comprised of only one fan and this fan is positioned downstream the burner so as to cause an air flow rate higher than that necessary for supplying the burner so that the exceeding air will dilute the flue gases generated by the combustion in the burner.

According to a feature of the present invention, the fan is a centrifugal or axial fan.

According to another feature of the present invention, the burner can operate with gaseous fuels of different kinds.

According to still another feature of the present invention the burner has an outlet shaped so as to deliver a laminar flow.

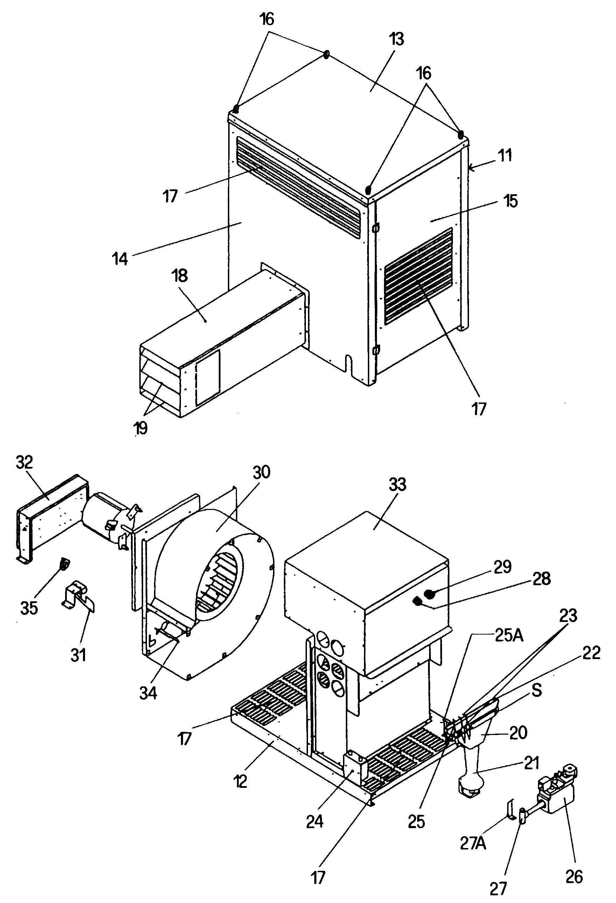

Further features and advantages of the present invention will become clear from the following detailed description together with the accopanying sole Figure of drawings in which an exploded view of the direct-fired gas circulating heating system of this invention is shown.

Referring to the Figure, the direct-fired gas circulating heating system therein illustrated is particularly intended to heat non human living quarters such as greenhouse, livestock and the like, since this is the purpose for which the direct-fired gas circulating heating system has been designed.

The direct-fired gas circulating heating system of the invention, generally indicated by 10, comprises a sheet metal housing 11, with a bottom panel 12 and a top panel 13, as well as lateral panels 14 and a door 15 giving access to its interior.

The heating system 10 can be installed onto ground or suspended by means of cables to be fixed to eyebolts 16 provided for this purpose on the top panel 13 or else it can be equipped with wheels in order to be trackable or movable.

The housing 11 of the heating system of the invention has multiple fresh air intake openings 17 and an air delivery conduit 18 connected thereto at the end of which adjustable baffles 19 are provided for suitably distributing the air in the space to be heated. This conduit 18 can be of rectangular or circular shape in cross section and can be of telescopic type in order to adjust its length to the measures necessary for the installation. The fresh air intake openings 17 are provided on the bottom panel 12 and the lateral panel 14 as well as on the door 15 of the housing 11. The fresh air intake openings 17 are configurated in order to prevent the rain from entering in the housing 11 so that to make the heating system of the invention suitable for outdoor installations. The bottom panel 12 of the housing 11 is provided with means (not shown) for ancoring the heating system of the invention to the ground or to supporting brackets as the case may be.

Inside the housing 11 of the heating system of the invention a burner 20 is arranged which is provided at the inlet with a venturi 21 and having an outlet 22 shaped in order to give a laminar flow. The ignition of the burner 20 is obtained by ignition electrodes 23 connected to an ignition transformer 24 and the presence of flame is controlled by an ionisation electrode 25. The ionisation electrode 25 is provided with a separate ground terminal 25A. The ingnition electrodes 23 and the ionisation electrode 25 are mounted on a support S which does not cause anomalous turbolences in the flame area.

The burner 20 can operate with different kinds of gaseous fuels and is supplied by means of a solenoid valve 26 embodying a filter and a pressure regulator and provided with a fuel injector 27. On the upper portion of the injector 27 a mixing device 27A is provided, the purpose of which is to prevent the laminar flow of the mixture of the fuel gas and air in the burner 20 and therefore to improve the uniformity of the fuel gas and air mixture. Possible operating failures are detected by two safety thermostats 28 and 29, the first one being manually resettable, while the second one is automatically resettable.

The feature of the present invention consists in that only one motor driven centrifugal fan 30 is provided, which is arranged downstream the burner 20 for drawing an amount of air higher than that necessary for the combustion so as to be able to dilute the combustion products in the exceeding amount of air. The operation of the centrifugal fan is controlled by a sail switch 31. A manually operated safety thermostat 34 is provided at the outlet of the fan 30 in order to stop the operation of the burner 20 when the temperature of the hot air is higher than the set point temperature. At the outlet of the fan 30 an automatically resettable thermostat 35 is arranged which is calibrated to a lower set point temperature for stopping the operation of the burner 20 before the manually operated safety thermostat 34 is operated in case of faillure of the latter.

An electronic control unit 32 permits the operator to carry out the necessary operations for operating the heating system of the invention through a switchboard or a remote control.

The operation of the direct-fired gas circulating heating system according to the present invention will now be described in the following.

In operative conditions, the centrifugal fan 30 draws an amount of air higher than that required for the combustion through the air intake openings 17 provided in the bottom panel 12, the lateral panel 14 and the door 15 of the housing 11 and this for the purpose of diluting with air the combustion products.

When hot air is required, the solenoid valve 26 controls the injection of fuel gas through the injector 27, according to determined values of flow rate and pressure. The fuel gas is injected into the venturi 21 where it is mixed together with the air drawn by the centrifugal fan 30 according to predetermined proportions. The air-fuel gas mixture flows out from the laminar outlet 22 of the burner 20 and is ignited by the ignition electrode 23.

The flue gas generated by combustion is mixed with the excess of air supplied by the fan 30 and, therefore, it is diluted before being blown in the space to be heated, in such a manner that the hot air outlet temperature is not too high, but adequate for the intended purposes of the heating system of the invention, and the concentration of the flue gas generated by combustion is tolerable in the excess of air. The air and flue gas mixture flowing from the burner is drawn by the fan 30 through the conduit 33 and then delivered through the delivery conduit 18.

The heating system of the present invention is suitable for all the purposes in which the mixture of the combustion products with air is permitted.

Furthermore, the heating system according to the present invention can be supplied with different kinds of gaseous fuels without requiring the replacement of the burner or of the fuel gas supply valve, this being an advantage from an operative point of view.

Finally, the heating system acccording to the present invention is relatively compact in size, simple in design and reliable and has very low construction and operation costs.

## Claims

1. Direct-fired gas circulating heating system of the type having a panel led housing (11) provided with at least a fresh air intake opening (17) and a hot air delivery opening (18) and enclosing a burner (20) and a fan assembly (30), characterized in that the fan assembly (30) is comprised of only one fan (30) and this fan (30) is positioned downstream the burner (20) so as to cause an air flow rate higher than that necessary for supplying the burner (20) so that the exceeding air will dilute the flue gases generated by the combustion in the burner (20).

2. Direct-fired gas circulating heating system according to claim 1, characterized in that said fan (30) is a centrifugal fan.

3. Direct-fired gas circulating heating system according to claim 1, characterized in that said fan (30) is an axial fan.

4. Direct-fired gas circulating heating system according to claim 1, characterized in that the burner (20) operates with gaseous fuels of different kinds.

5. Direct-fired gas circulating heating system according to claims 1 and 4, characterized in that the burner (20) has an outlet (22) shaped so as to deliver a laminar flow.

6. Direct-fired gas circulating heating system according to the preceding claims, characterized in that it is intended for fixed or canalized installations.

7. Direct-fired gas circulating heating system according to claims 1 to 5, characterized in that it is intended for suspended installations.

8. Direct-fired gas circulating heating system according to one of claims 1 to 5, characterized in that it is provided with wheels in order to be trackable.

9. Use of the direct-fired gas circulating heating system according to the preceding claims in non human living quarters such as greenhouse, livestocks and the like and in installations exposed to wheather severities.
